# EUROPEAN PATENT APPLICATION

(11) **EP 4 808 235 A1**
(43) Date of publication of application: **16.09.2026**
(21) Application number: 23957980.8
(22) Date of filing: 09.11.2023
(51) Int. Cl.: H04W 72/0446

(54) **OTFS RESOURCE CONFIGURATION METHOD AND APPARATUS, AND STORAGE MEDIUM**

(71) Applicant: Beijing Xiaomi Mobile Software Co., Ltd., Beijing 100085 (CN)
(72) Inventor: ZHANG, Zhenyu, Beijing 100085 (CN); DUAN, Gaoming, Beijing 100085 (CN); ZHAO, Qun, Beijing 100085 (CN)
(74) Representative: Dehns Germany Partnerschaft mbB
(86) International application number: PCT/CN2023/130718
(87) International publication number: WO 2025/097372

(57) **Abstract**

The present invention relates to the technical field of communications, and specifically relates to an OTFS resource configuration method and apparatus, and a storage medium. The OTFS resource configuration method comprises: performing channel estimation with a second device in a delay Doppler (DD) domain by means of a first OTFS frame; determining channel state information corresponding to each time-frequency resource unit in a first time-frequency resource grid, wherein the first time-frequency resource grid corresponds to a first DD domain resource grid; on the basis of the channel state information corresponding to each time-frequency resource unit, determining a second time-frequency resource grid from the first time-frequency resource grid; and on the basis of the second time-frequency resource grid, determining a second DD domain resource grid corresponding to a second OTFS frame. Therefore, OTFS data can be mapped to a time-frequency resource having good channel quality for transmission, thereby improving the transmission efficiency.

## Description

### TECHNICAL FIELD

The present disclosure relates to the communication technical field, and more specifically, to a method and apparatus of resource allocation for OTFS, and a storage medium.

### BACKGROUND

An Orthogonal Time Frequency Space (OTFS) modulation technology has been proposed in mobile network communications in recent years, which can improve the performance of wireless communication systems in high Doppler situations. However, there are many problems in allocation of OTFS resources.

### SUMMARY

Embodiments of the present disclosure provide a method and apparatus of resource allocation for OTFS, and a storage medium, in order to solve the technical problem of OTFS resource allocation in related art.

According to a first aspect of an embodiment of the present disclosure, a method of resource allocation for OTFS is provided. The method is performed by a first device. The method includes: performing channel estimation with a second device in a Delay Doppler (DD) domain through a first OTFS frame; determining channel state information corresponding to respective time-frequency resource elements in a first time-frequency resource grid; wherein the first time-frequency resource grid corresponds to a first DD domain resource grid, and the first DD domain resource grid corresponds to the first OTFS frame; determining a second time-frequency resource grid from the first time-frequency resource grid according to the channel state information corresponding to the respective time-frequency resource elements; and determining a second DD domain resource grid corresponding to a second OTFS frame according to the second time-frequency resource grid.

According to a second aspect of an embodiment of the present disclosure, a method of resource allocation for OTFS is provided. The method is performed by a second device. The method includes: performing channel estimation with a first device in a Delay Doppler (DD) domain through a first OTFS frame, so that the first device obtains channel state information corresponding to respective time-frequency resource elements in a first time-frequency resource grid; wherein the first time-frequency resource grid corresponds to a first DD domain resource grid, and the first DD domain resource grid corresponds to the first OTFS frame; receiving first information from the first device; wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

According to a third aspect of an embodiment of the present disclosure, an apparatus of resource allocation for OTFS is provided. The apparatus includes: a transceiving module configured to perform channel estimation with a second device in a Delay Doppler (DD) domain through a first OTFS frame; a processing module configured to determine channel state information corresponding to respective time-frequency resource elements in a first time-frequency resource grid; wherein the first time-frequency resource grid corresponds to a first DD domain resource grid, and the first DD domain resource grid corresponds to the first OTFS frame; the processing module is further configured to: determine a second time-frequency resource grid from the first time-frequency resource grid according to the channel state information corresponding to the respective time-frequency resource elements; and determine a second DD domain resource grid corresponding to a second OTFS frame according to the second time-frequency resource grid.

According to a fourth aspect of an embodiment of the present disclosure, an apparatus of resource allocation for OTFS is provided. The apparatus includes: a transceiving module configured to perform channel estimation with a first device in a Delay Doppler (DD) domain through a first OTFS frame, so that the first device obtains channel state information corresponding to respective time-frequency resource elements in a first time-frequency resource grid; wherein the first time-frequency resource grid corresponds to a first DD domain resource grid, and the first DD domain resource grid corresponds to the first OTFS frame; the transceiving module is further configured to receive first information from the first device; wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

According to a fifth aspect of an embodiment of the present disclosure, a terminal is provided. The terminal includes: one or more processors; and a memory coupled to the processor(s). The memory stores executable instructions. When the executable instructions are executed by the processor(s), the network device is caused to perform the method of resource allocation for OTFS described in the first or second aspect above.

According to a sixth aspect of an embodiment of the present disclosure, a network device is provided. The network device includes: one or more processors; and a memory coupled to the processor(s). The memory stores executable instructions. When the executable instructions are executed by the processor(s), the network device is caused to perform the method of resource allocation for OTFS described in the first or second aspect above.

According to a seventh aspect of an embodiment of the present disclosure, a communication system is provided. The communication system includes a terminal and a network device. The terminal is configured to implement the method of resource allocation for OTFS described in the first aspect, and the network device is configured to implement the method of resource allocation for OTFS described in the second aspect.

According to an eighth aspect of an embodiment of the present disclosure, a communication system is provided. The communication system includes a terminal and a network device. The terminal is configured to implement the method of resource allocation for OTFS described in the second aspect, and the network device is configured to implement the method of resource allocation for OTFS described in the first aspect.

According to a ninth aspect of an embodiment of the present disclosure, a storage medium is provided. The storage medium stores instructions. When the instructions are run on a communication device, the communication device is caused to perform the method of resource allocation for OTFS described in the first or second aspect above.

According to the embodiments of the present disclosure, in an OTFS system, channel state information in a time-frequency domain is obtained by performing channel estimation in a DD domain. Based on the channel state information, time-frequency resource(s) with better channel quality in the time-frequency domain is(are) allocated to the terminal to obtain a second time-frequency resource grid. Then, a second DD domain resource grid corresponding to a second OTFS frame is set based on the second time-frequency resource grid. Thus, when transmitting OTFS data through the second OTFS frame, the OTFS data can be mapped to time-frequency resource(s) with better channel quality for transmission, thereby improving transmission efficiency.

### BRIEF DESCRIPTION OF THE DRAWINGS

To more clearly illustrate the technical solutions in the embodiments of the present disclosure, the accompanying drawings used in the description of the embodiments will be briefly introduced below. Obviously, the accompanying drawings described below are merely a part of embodiments of the present disclosure. For those skilled in the art, other drawings can be obtained based on these drawings without creative effort.
FIG. 1 is a schematic diagram of the architecture of a communication system according to an embodiment of the present disclosure.
FIG. 2 is a schematic diagram showing interactions in a method of resource allocation for OTFS according to an embodiment of the present disclosure.
FIG. 3A is a schematic flowchart of a method of resource allocation for OTFS according to an embodiment of the present disclosure.
FIG. 3B is a schematic diagram of a resource grid of an OTFS frame according to an embodiment of the present disclosure.
FIG. 3C is a schematic diagram of a resource grid of an OTFS frame according to an embodiment of the present disclosure.
FIG. 3D is schematic diagram of a resource grid of an OTFS frame according to an embodiment of the present disclosure.
FIG. 4 is a schematic flowchart of a method of resource allocation for OTFS according to an embodiment of the present disclosure.
FIG. 5 is a schematic block diagram of an apparatus structure of a terminal according to an embodiment of the present disclosure.
FIG. 6 is a schematic block diagram of an apparatus structure of a network device according to an embodiment of the present disclosure.
FIG. 7 is a schematic diagram of a structure of a communication device provided in an embodiment of the present disclosure.
FIG. 8 is a schematic diagram of a structure of a chip provided in an embodiment of the present disclosure.

### DETAILED DESCRIPTION

The embodiments of the present disclosure provide a method and apparatus of resource allocation for OTFS, and a storage medium.

In a first aspect, an embodiment of the present disclosure provides a method of resource allocation for OTFS. The method is performed by a first device. The method includes: performing channel estimation with a second device in a Delay Doppler (DD) domain through a first OTFS frame; determining channel state information corresponding to respective time-frequency resource elements in a first Time Frequency (TF) resource grid; wherein the first time-frequency resource grid corresponds to a first DD domain resource grid, and the first DD domain resource grid corresponds to the first OTFS frame; determining a second time-frequency resource grid from the first time-frequency resource grid according to the channel state information corresponding to the respective time-frequency resource elements; and determining a second DD domain resource grid corresponding to a second OTFS frame according to the second time-frequency resource grid.

In the above embodiment, in an OTFS system, channel state information in the time-frequency domain is obtained by performing channel estimation in the DD domain. Based on the channel state information, time-frequency resource(s) with better channel quality in the time-frequency domain is(are) allocated to the terminal to obtain a second time-frequency resource grid. Then, a second DD domain resource grid corresponding to the second OTFS frame is set based on the second time-frequency resource grid. Thus, when transmitting OTFS data through the second OTFS frame, the OTFS data can be mapped to time-frequency resource(s) with better channel quality for transmission, thereby improving transmission efficiency.

In conjunction with some embodiments of the first aspect, in some embodiments, performing the channel estimation with the second device in the Delay Doppler (DD) domain through the first OTFS frame includes: receiving, from the second device, a first reference signal sent in the Delay Doppler (DD) domain through the first OTFS frame; and performing channel estimation according to the first reference signal. Determining the channel state information corresponding to the respective time-frequency resource elements in the first time-frequency resource grid includes: determining a first channel response in the DD domain; determining the first channel response to a second channel response in the time-frequency domain through a transformation algorithm; and determining the channel state information according to the second channel response.

In conjunction with some embodiments of the first aspect, in some embodiments, the transformation algorithm includes Inverse Sympletic Fourier Transform ISFFT.

In conjunction with some embodiments of the first aspect, in some embodiments, the first reference signal includes at least one of: a Channel State Information Reference Signal (CSI-RS); a Sounding Reference Signal (SRS); a reference signal for channel estimation in the DD domain.

In conjunction with some embodiments of the first aspect, in some embodiments, the first reference signal may be pre-coded, or may not be pre-coded.

In conjunction with some embodiments of the first aspect, in some embodiments, the second time-frequency resource grid includes time-frequency resource element(s) in the first time-frequency resource grid that has(have) better channel quality.

In conjunction with some embodiments of the first aspect, in some embodiments, the number of DD domain resource elements included in the second DD domain resource grid is not greater than the number of DD domain resource elements included in the first DD domain resource grid.

In conjunction with some embodiments of the first aspect, in some embodiments, the method further includes: determining the number of resource elements in the second DD domain resource grid in a delay dimension; and/or determining the number of resource elements in the second DD domain resource grid in a Doppler dimension.

In conjunction with some embodiments of the first aspect, in some embodiments, the number of resource elements in the second DD domain resource grid in the delay dimension is not greater than the number of resource elements in the first DD domain resource grid in the delay dimension; the number of resource elements in the second DD domain resource grid in the Doppler dimension is not greater than the number of resource elements in the first DD domain resource grid in the Doppler dimension.

In conjunction with some embodiments of the first aspect, in some embodiments, the method further includes: determining first time corresponding to the second OTFS frame, wherein the first time is time at which data transmission is performed using the second OTFS frame; and performing OTFS data transmission with the second device through the second OTFS frame at the first time.

In conjunction with some embodiments of the first aspect, in some embodiments, the first time is carried by at least one of: a Radio Resource Control (RRC) message; Medium Access Control Control Element (MAC-CE); Downlink Control Information (DCI).

In conjunction with some embodiments of the first aspect, in some embodiments, the method further includes: sending first information to the second device, wherein the first information is used to indicate configuration information of the second DD domain resource grid.

In conjunction with some embodiments of the first aspect, in some embodiments, the first device is a terminal and the second device is a network device; or, the first device is a network device and the second device is a terminal.

In a second aspect, an embodiment of the present disclosure provides a method of resource allocation for OTFS. The method is performed by a second device. The method includes: performing channel estimation with a first device in a Delay Doppler (DD) domain through a first OTFS frame, so that the first device obtains channel state information corresponding to respective time-frequency resource elements in a first time-frequency resource grid; wherein the first time-frequency resource grid corresponds to a first DD domain resource grid, and the first DD domain resource grid corresponds to the first OTFS frame; receiving first information from the first device, wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

In conjunction with some embodiments of the second aspect, in some embodiments, performing channel estimation with the first device in the Delay Doppler (DD) domain through the first OTFS frame includes: sending, to the first device, a first reference signal in the Delay Doppler (DD) domain through the first OTFS frame to perform channel estimation, so that the first device obtains a first channel response in the DD domain, determines the first channel response to a second channel response in the TF domain through a transformation algorithm, and further determines the channel state information based on the second channel response.

In conjunction with some embodiments of the second aspect, in some embodiments, the transformation algorithm includes Inverse Sympletic Fourier Transform ISFFT.

In conjunction with some embodiments of the second aspect, in some embodiments, the first reference signal includes at least one of: a Channel State Information Reference Signal (CSI-RS); a Sounding Reference Signal (SRS); other reference signal(s).

In conjunction with some embodiments of the second aspect, in some embodiments, the first reference signal may be pre-coded, or may not be pre-coded.

In conjunction with some embodiments of the second aspect, in some embodiments, the second time-frequency resource grid includes time-frequency resource element(s) in the first time-frequency resource grid that is(are) of better channel quality.

In conjunction with some embodiments of the second aspect, in some embodiments, the number of DD domain resource elements included in the second DD domain resource grid is not greater than the number of DD domain resource elements included in the first DD domain resource grid.

In conjunction with some embodiments of the second aspect, in some embodiments, the first information includes at least one of: the number of resource elements in the second DD domain resource grid in a delay dimension; the number of resource elements in the second DD domain resource grid in a Doppler dimension.

In conjunction with some embodiments of the second aspect, in some embodiments, the number of resource elements in the second DD domain resource grid in the delay dimension is not greater than the number of resource elements in the first DD domain resource grid in the delay dimension; the number of resource elements in the second DD domain resource grid in the Doppler dimension is not greater than the number of resource elements in the first DD domain resource grid in the Doppler dimension.

In conjunction with some embodiments of the second aspect, in some embodiments, the method further includes: determining first time corresponding to the second OTFS frame, wherein the first time is time at which data transmission is performed using the second OTFS frame; and performing OTFS data transmission with the first device through the second OTFS frame at the first time.

In conjunction with some embodiments of the second aspect, in some embodiments, the first time of the second OTFS frame is carried by at least one of: a Radio Resource Control (RRC) message; Medium Access Control Control Element (MAC-CE); Downlink Control Information (DCI).

In a third aspect, an apparatus of resource allocation for OTFS is provided. The apparatus includes: a transceiving module configured to perform channel estimation with a second device in a Delay Doppler (DD) domain through a first OTFS frame; and a processing module configured to determine channel state information corresponding to respective time-frequency resource elements in a first time-frequency resource grid; wherein the first time-frequency resource grid corresponds to a first DD domain resource grid, and the first DD domain resource grid corresponds to the first OTFS frame; the processing module is further configured to: determine a second time-frequency resource grid from the first time-frequency resource grid according to the channel state information corresponding to the respective time-frequency resource elements; and determine a second DD domain resource grid corresponding to a second OTFS frame according to the second time-frequency resource grid.

In a fourth aspect, an apparatus of resource allocation for OTFS is provided. The apparatus includes: a transceiving module configured to perform channel estimation with a first device in a Delay Doppler (DD) domain through a first OTFS frame, so that the first device obtains channel state information corresponding to respective time-frequency resource elements in a first time-frequency resource grid; wherein the first time-frequency resource grid corresponds to a first DD domain resource grid, and the first DD domain resource grid corresponds to the first OTFS frame; the transceiving module is further configured to receive first information from the first device, wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

In a fifth aspect, a terminal is provided. The terminal includes: one or more processors; and a memory coupled to the processor(s). The memory stores executable instructions. When the executable instructions are executed by the processors, a network device is caused to perform the method of resource allocation for OTFS described in the optional embodiments of the first or second aspect above.

In a sixth aspect, a network device is provided. The network device includes: one or more processors; and a memory coupled to the processor(s). The memory stores executable instructions. When the executable instructions are executed by the processor(s), the network device is caused to perform the method of resource allocation for OTFS described in the optional embodiments of the first or second aspect above.

In a seventh aspect, an embodiment of the present disclosure provides a communication device. The communication device includes: one or more processors; and a memory coupled to the processor(s). The memory stores executable instructions. When the executable instructions are executed by the processor(s), the processor(s) is(are) caused to invoke the executable instructions to cause the communication device to perform the method of resource allocation for OTFS as described in the optional embodiments of the first or second aspect.

In an eighth aspect, an embodiment of the present disclosure provides a communication system. The communication system includes: a terminal and a network device. The terminal is configured to perform the method described in the optional embodiments of the first aspect, and the network device is configured to perform the method described in the optional embodiments of the second aspect.

In a ninth aspect, an embodiment of the present disclosure provides a communication system. The communication system includes: a terminal and a network device. The terminal is configured to perform the method described in the optional embodiments of the second aspect, and the network device is configured to perform the method described in the optional embodiments of the first aspect.

In a tenth aspect, an embodiment of the present disclosure provides a storage medium. The storage medium stores instructions. When the instructions are run on a communication device, the communication device is caused to perform the method as described in the optional embodiments of the first or second aspect.

In an eleventh aspect, an embodiment of the present disclosure provides a program product. When the program product is executed by a communication device, the communication device is caused to perform the method as described in the optional embodiments of the first or second aspect.

In a twelfth aspect, an embodiment of the present disclosure provides a computer program. When the computer program is run on a computer, the computer is caused to perform the method described in the optional embodiments of the first or second aspect.

It can be understood that the aforementioned terminal, network device, communication device, communication system, storage medium, program product, computer program are all used to perform the methods provided in the embodiments of the present disclosure. Therefore, for the beneficial effects that can be achieved, reference can be made to the beneficial effects in the corresponding methods, which will not be repeated here.

The embodiments of the present disclosure provide a method and apparatus of resource allocation for OTFS and a storage medium. In some embodiments, "information sending method", "information receiving method" can be used interchangeably with the terms such as "information processing method", "communication method", etc. The "terminal", "network device" can be used interchangeably with terms such as "information processing apparatus", "communication apparatus", etc. The terms "information processing system" and "communication system", etc., can be used interchangeably.

The embodiments of the present disclosure are not exhaustive, but are merely illustrative of some embodiments, and are not intended to be a specific limitation on the protection scope of the present disclosure. In the case of no contradiction, each step in a certain embodiment can be implemented as an independent embodiment, and the steps can be arbitrarily combined. For example, a solution obtained from removing some steps from a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined. For example, some or all steps of different embodiments can be arbitrarily combined, and a certain embodiment can be arbitrarily combined with the optional implementations of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc.

For example, when articles such as "a", "an", or "the", etc., in English are used in translation, the noun following the article may be understood as a singular expression form or a plural expression form.

In the embodiments of the present disclosure, "a plurality of" refers to two or more.

In some embodiments, the terms such as "at least one of", "one or more", "a plurality of", "multiple", etc., may be used interchangeably.

In the embodiments of the present disclosure, descriptions such as "at least one of A or B", "A and/or B", "in one case, A, and in another case, B", or "in response to one case, A, and in response to another case, B", etc., can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, and C, etc.

In some embodiments, descriptions such as "A or B", etc. may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, and C, etc.

The prefixes "first" and "second" in some embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes.

For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first apparatus" as an example, the number of "apparatuses" can be one or more. In addition, the objects modified by different prefixes can be the same or different. For example, if the description object is "apparatus", then the "first apparatus" and the "second apparatus" can be the same apparatus or different apparatuses, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, the terms such as "in response to...", "in response to determining...", "in the case of...", "when...", "at the time of...", "if...", "provided ...", etc., can be used interchangeably.

In some embodiments, the terms such as "greater than", "greater than or equal to", "not less than", "more than", "more than or equal to", "not less than", "higher than", "higher than or equal to", "not lower than", "above", etc. can be used interchangeably, and terms such as "less than", "less than or equal to", "not greater than", "less than", "less than or equal to", "not more than", "lower than", "lower than or equal to", "not higher than", "below", etc. can be used interchangeably.

In some embodiments, the apparatus and so on can be interpreted as physical or virtual, and its name is not limited to
the name described in the embodiments. Terms such as "apparatus", "equipment", "device", "circuit", "network element", "node", "function", "unit", "section", "system", "network", "chip", "chip system", "entity", "subject", or the like, can be used interchangeably.

In some embodiments, "network" can be interpreted as an apparatus included in the network (such as an access network device, a core network device, etc.)

In some embodiments, terms such as "access network device (AN device)", "radio access network device (RAN device)", "base station (BS)", "radio base station", "fixed station", "node", "access point", "transmission point (TP)", "reception point (RP)", "transmission reception point (transmission/reception point, TRP)", "panel", "antenna panel", "antenna array", "cell", "macro cell", "small cell", "femto cell", "pico cell" "sector", "cell group", "serving cell", "carrier", "component carrier", "bandwidth part (BWP)", or the like, can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or the like, can be used interchangeably.

In some embodiments, the access network device, the core network device, or the network device may be replaced by a terminal. For example, embodiments of the present disclosure may also be applied to a structure where communications between the access network device, the core network device, or the network device and a terminal is replaced by communications between multiple terminals (e.g., device-to-device (D2D), vehicle-to-everything (V2X), etc.). In this case, a structure in which a terminal has all or part of functions of the access network device may be set. Furthermore, terms such as "uplink", "downlink", etc., may be replaced with terms corresponding to communications between terminals (e.g., "side", "sidelink"). For example, an uplink channel, a downlink channel, etc., may be replaced with a sidelink channel, and an uplink, a downlink, etc., may be replaced with a sidelink.

In some embodiments, the terminal may be replaced by an access network device, a core network device, or a network device. In this case, a structure in which the access network device, the core network device, or the network device may have all or a part of the functions of the terminal may be set.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

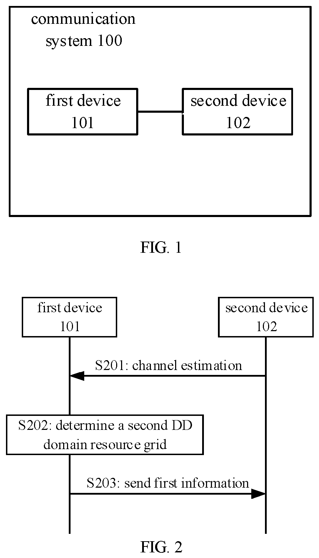

FIG. 1 is a schematic diagram of the architecture of a communication system according to an embodiment of the present disclosure.

As shown in FIG. 1, the communication system 100 includes a first device 101 and a second device 102. The first device and the second device may be a terminal and a network device, respectively. The network device may include at least one of: an access network device, a core network device.

In some embodiments, the terminal includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the access network device may be, for example, a node or device that enables a terminal to access a wireless network. The access network device may include, but is not limited to, at least one of the following: an evolved Node B (eNB) in a 5G communication system, a next-generation evolved Node B (next generation eNB, ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (cloud RAN), a base station in other communication systems, or an access node in a Wi-Fi system.

In some embodiments, the core network device may be a single device including one or more network elements, or it may be multiple devices or a cluster of devices, including all or part of the aforementioned one or more network elements. The network elements may be virtual or physical. The core network may include, for example, at least one of: an Evolved Packet Core (EPC), a 5G Core Network (5GCN), a Next Generation Core (NGC).

In some embodiments, the technical solutions of the present disclosure can be applicable to the Open RAN architecture. In this case, the interfaces between access network devices or interfaces within an access network device involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DU and centrally controlled by the CU, but it is not limited thereto.

It can be understood that the communication system described in the embodiments of the present disclosure is for the purpose of more clearly illustrating the technical solutions of the present disclosure, and does not constitute a limitation on the technical solutions provided in the present disclosure. As those skilled in the art will know, with the evolution of system architecture and the emergence of new business scenarios, the technical solutions provided in the embodiments of the present disclosure are also applicable to similar technical problems.

The following embodiments of the present disclosure can be applied to the communication system 100 shown in FIG. 1, or to some of the subjects, but are not limited thereto. The subjects shown in FIG. 1 are illustrative. The communication system may include all or some of the subjects in FIG. 1, or it may include subjects other than those of FIG. 1. The number and configuration of the subjects are arbitrary, the subjects can be physical or virtual, and the connection relationship between the subjects is illustrative. The subjects may not be connected or may be connected, and the connection can be in any way, which may be a direct connection or an indirect connection, a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems utilizing other communication methods, next-generation systems built upon them, or the like. Furthermore, a combination of multiple systems (e.g., a combination of LTE or LTE-A with 5G) can be applied.

FIG. 2 is a schematic diagram showing interactions in a method of resource allocation for OTFS according to an embodiment of the present disclosure.

As shown in FIG. 2, the method of resource allocation for OTFS includes:

In step S201, a first device performs channel estimation with a second device.

In some embodiments, the first device may perform channel estimation with the second device in a Delay Doppler (DD) domain through a first OTFS frame, and determine channel state information corresponding to respective time-frequency resource elements in a first time-frequency resource grid. The first time-frequency resource grid corresponds to a first DD domain resource grid, and the first DD domain resource grid corresponds to the first OTFS frame.

In some embodiments, the second device may send, to the first device, a first reference signal in the Delay Doppler (DD) domain through the first OTFS frame to perform channel estimation, so that the first device obtains a first channel response in the DD domain, and determines the first channel response to a second channel response in a Time-Frequency (TF) domain through a transformation algorithm, and further obtains the channel state information corresponding to the respective time-frequency resource elements in the first time-frequency resource grid based on the second channel response.

In some embodiments, the transformation algorithm includes Inverse Sympletic Fourier Transform ISFFT.

In some embodiments, the first channel response in the DD domain may be converted to the second channel response in the TF domain through the ISFFT algorithm.

In some embodiments, the second device may send, to the first device, a Channel State Information Reference Signal (CSI-RS) in the DD domain through the first OTFS frame to perform channel estimation.

In some embodiments, the second device may send, to the first device, Sounding Reference Signal (SRS) in the DD domain through the first OTFS frame to perform channel estimation.

In some embodiments, the second device may send a reference signal used for DD domain channel estimation through the first OTFS frame to perform channel estimation.

In some embodiments, the first reference signal sent by the second device to the first device in the DD domain through the first OTFS frame may be a pre-coded reference signal.

In some embodiments, the first reference signal sent by the second device to the first device in the DD domain through the first OTFS frame may be a reference signal which is not pre-coded.

In step S202, the first device may determine the second DD domain resource grid.

In some embodiments, the first device may determine a second time-frequency resource grid from the first time-frequency resource grid according to the channel state information corresponding to respective time-frequency resource elements, and determine the second DD domain resource grid corresponding to the second OTFS frame according to the second time-frequency resource grid.

In some embodiments, the first device may determine the second time-frequency resource grid from the first time-frequency resource grid according to the channel state information corresponding to respective time-frequency resource elements. The second time-frequency resource grid may include time-frequency resource element(s) in the first time-frequency resource grid that is(are) of better channel quality.

In some embodiments, the number of DD domain resource elements included in the second DD domain resource grid is not greater than the number of DD domain resource elements included in the first DD domain resource grid.

In step S203, the first device sends first information to the second device.

In some embodiments, the first device sends the first information to the second device. The first information is used to indicate configuration information of the second DD domain resource grid corresponding to the second OTFS frame.

In some embodiments, determining the second DD domain resource grid corresponding to the second OTFS frame may include: determining the number of resource elements in the second DD domain resource grid in a delay dimension; and/or determining the number of resource elements in the second DD domain resource grid in a Doppler dimension.

In some embodiments, the number of resource elements in the second DD domain resource grid in the delay dimension is not greater than the number of resource elements in the first DD domain resource grid in the delay dimension; the number of resource elements in the second DD domain resource grid in the Doppler dimension is not greater than the number of resource elements in the first DD domain resource grid in the Doppler dimension.

In some embodiments, the first device determines first time corresponding to the second OTFS frame; the first time being the time at which data transmission is performed using the second OTFS frame; the OTFS data transmission is performed with the second device through the second OTFS frame at the first time.

In some embodiments, the second device determines the first time corresponding to the second OTFS frame; and the OTFS data transmission is performed with the second device through the second OTFS frame at the first time.

In some embodiments, the first device may send the first time to the second device via first information.

In some embodiments, the first time is carried by at least one of: a Radio Resource Control (RRC) message; Medium Access Control Control Element (MAC-CE); Downlink Control Information (DCI).

In some embodiments, the first device is a terminal and the second device is a network device; or the first device is a network device and the second device is a terminal.

The communication method involved in the embodiments of the present disclosure may include at least one of steps S201 to S203. For example, step S201 may be implemented as an independent embodiment, step S202 may be implemented as an independent embodiment, step S203 may be implemented as an independent embodiment, steps S201+S202 may be implemented as an independent embodiment, steps S202+S203 may be implemented as an independent embodiment, and steps S201+S202 +S203 may be implemented as an independent embodiment, but the present disclosure is not limited to the list embodiments.

In some embodiments, steps S201, S202, and S203 may be performed in a different order or may be performed simultaneously.

In some embodiments, step S201 is optional, and one or more of these steps may be omitted or replaced in different embodiments.

In some embodiments, step S202 is optional, and one or more of these steps may be omitted or replaced in different embodiments.

In some embodiments, step S203 is optional, and one or more of these steps may be omitted or replaced in different embodiments.

In some embodiments, other optional embodiments described before or after the description corresponding to FIG. 2 may be referred to.

Orthogonal Frequency Division Multiplexing (OFDM) is widely used in cellular mobile networks. Although adding a Cyclic Prefix (CP) can effectively mitigate the influence of multipath delay, the performance of OFDM systems still deteriorates in time-varying channels. At higher radio frequencies or with high terminal speeds, such as in high-speed rail scenarios, the Doppler shift and Doppler spread of a wireless channel are relatively large, causing Inter-Carrier Interference (ICI) in OFDM systems. Although using larger subcarrier spacing (SCS) can reduce the influence of Doppler, the CP length is proportionally reduced for a given overhead, potentially making the CP insufficient to combat the influence of multipath delay. To improve the performance of wireless communication systems in high Doppler situations, an OTFS technology has emerged and is widely discussed in academia and industry. In an OTFS system, constellation symbols are first mapped to a Delay Doppler (DD) domain. Then, the signal is converted to a Time Frequency (TF) domain using inverse Sympletic Fourier Transform (Inverse Sympletic Fast Fourier Transform, ISFFT). Further, the signal is converted to a time domain through Heisenburg transform. After the OTFS time domain signal passes through the channel, the OTFS time domain signal undergoes inverse transformations of the above transformations at the receiver, namely Wigner transform and Sympletic Fourier Transform (Sympletic Fast Fourier Transform, SFFT), converting the signal to a DD domain signal for equalization detection and decoding. In the OTFS system, after the ISFFT transformation, the data symbols on each DD domain Resource Element (RE) in the DD domain are extended to all time-frequency resource elements in the TF domain. This means they undergo the same frequency selectivity and time diversity of the time-frequency resource elements in the TF domain. Therefore, all data symbols in the DD domain can be approximated as having experienced the same time-invariant channel.

Since time-frequency domain signal(s) experiences different frequency selection channels, it is needed to consider how to design OTFS self-adaptive transmission to map OTFS data to time-frequency domain resource element(s) with better channel quality for transmission, so as to improve system performance.

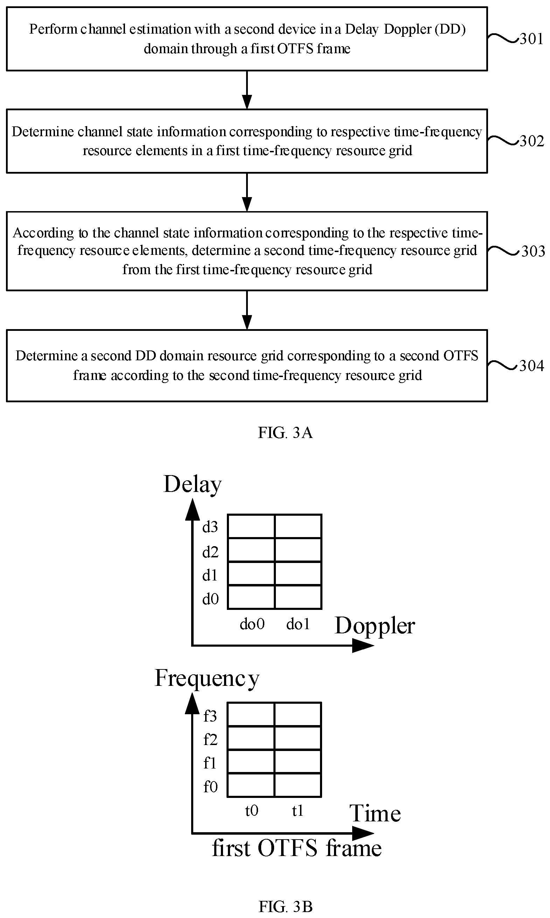

An embodiment of the present disclosure provides a method of resource allocation for OTFS. FIG. 3A is a schematic flowchart of a method of resource allocation for OTFS according to an embodiment of the present disclosure. The method of resource allocation for OTFS shown in this embodiment may be performed by a first device. The first device may be a terminal or a network device.

As shown in FIG. 3A, the method of resource allocation for OTFS may include the following steps:

In step S301, channel estimation is performed with a second device in a Delay Doppler (DD) domain through a first OTFS frame.

In step S302, channel state information corresponding to respective time-frequency resource elements in a first time-frequency resource grid is determined. The first time-frequency resource grid corresponds to the first DD domain resource grid, and the first DD domain resource grid corresponds to the first OTFS frame.

In some embodiments, channel estimation may be performed between the first device and the second device, and the channel quality between the first device and the second device in the time-frequency domain may be obtained according to a channel estimation result. The channel quality in the time-frequency domain may be represented by Channel State Information (CSI) of respective time-frequency resource elements.

In some embodiments, the first device may perform channel estimation with the second device in the DD domain in a pre-configured first OTFS frame, thereby obtaining the channel state information corresponding to respective time-frequency resource elements in a first time-frequency resource grid corresponding to the first OTFS frame according to the channel estimation result.

Before performing the channel estimation in the DD domain, configuration information of the first OTFS frame may be obtained first. The configuration information is used to indicate a first DD domain resource grid corresponding to the first OTFS frame. For example, the configuration information may indicate the number M1 of resource elements in a delay dimension and the number N1 of resource elements in a Doppler dimension in the first DD domain resource grid, and it can be determined that the first DD domain resource grid includes M1*N1 DD domain resource elements.

The configuration information of the first OTFS frame may also be used to indicate the first time-frequency resource grid corresponding to the first OTFS frame. The first DD domain resource grid corresponds to the first time-frequency domain resource grid. For example, the first DD domain resource grid is an M1*N1 DD domain resource grid, and the first time-frequency resource grid corresponding to the first DD domain resource grid has N1 resource elements in a time dimension and M1 resource elements in a frequency dimension, and the first time-frequency resource grid includes M1*N1 time-frequency resource elements.

The first device performs channel estimation with the second device through the first OTFS frame. According to the channel estimation result, channel state information of each time-frequency resource element in the M1*N1 time-frequency resource elements included in the first time-frequency resource grid can be determined.

For example, as shown in FIG. 3B, the first DD domain resource grid corresponding to the first OTFS frame has 4 resource elements in the delay dimension (M1=4) and 2 resource elements in the Doppler dimension (N1=2). Correspondingly, the first time-frequency resource grid corresponding to the first OTFS frame has 4 resources in the frequency dimension (M1=4) and 2 resource elements in the Doppler dimension (N1=2).

In step S303, a second time-frequency resource grid is determined from the first time-frequency resource grid according to the channel state information corresponding to respective time-frequency resource elements.

In some embodiments, after obtaining the channel state information of each time-frequency resource element, time-domain resource(s), frequency-domain resource(s), or time-frequency resource(s) that meets(meet) a preset filtering condition can be selected from the first time-frequency resource grid based on the channel state information, and a second time-frequency resource grid can be determined based on the selected time-domain resource(s), frequency-domain resource(s), or time-frequency resource(s).

The preset filtering condition may be set according to actual needs, such as based on channel quality (good or poor), resource utilization rate (high or low), or the amount of data to be transmitted (much or less), etc. For simplicity, the following embodiments will use channel quality as an example.

The channel quality (good or poor) may be determined by comparing at least one of the following channel state information: channel gain, delay, phase difference, channel state index, etc.

In some embodiments, after obtaining the channel state information of each time-frequency resource element, time-domain resource(s), frequency-domain resource(s), or time-frequency resource(s) with better channel quality can be selected from the time-frequency resource elements in the first time-frequency resource grid, and the second time-frequency resource grid can be determined based on the selected time-domain resource(s), frequency-domain resource(s), or time-frequency resource(s).

The filtering condition corresponding to a better channel quality may include at least one of: time-domain resource(s), frequency-domain resource(s), or time-frequency resource(s) among the time-frequency resource elements in the first time-frequency resource grid whose channel state information reaches a target threshold; a certain proportion of time-domain resource(s), frequency-domain resource(s), or time-frequency resource(s) among the time-frequency resource elements in the first time-frequency resource grid whose channel state information is optimal, for example, selecting the top 50 % of the first time-frequency resource grid with the optimal channel state information.

In some embodiments, time-domain resource(s) with better channel quality may be selected from the first time-frequency resource grid in the time dimension based on channel state information, and the second time-frequency resource grid may be determined based on the selected time-domain resource(s). The second time-frequency resource grid includes time-frequency resource element(s) in a time domain range with better channel quality. For example, as shown in FIG. 3B, the channel state information of the time-frequency resource element(s) where t0 is located and the channel state information of the time-frequency resource element(s) where t1 is located may be compared in the time dimensions t0 and t1. If the comparison result shows that the channel quality of the time-frequency resource element(s) where t0 is located is better, the second time-frequency resource grid may be formed by the time-frequency resource element(s) where t0 is located.

In some embodiments, frequency-domain resource(s) with better channel quality may be selected from the first time-frequency resource grid in the frequency dimension based on channel state information, and the second time-frequency resource grid may be determined based on the selected frequency-domain resource(s). The second time-frequency resource grid includes time-frequency resource element(s) in a frequency band with better channel quality. For example, as shown in FIG. 3B, in the frequency dimension f0 to f3, the time-frequency resource element(s) where f0 is located, the time-frequency resource element(s) where f1 is located, the time-frequency resource element(s) where f2 is located and the time-frequency resource element(s) where f3 is located can be compared. If the comparison result shows that the channel quality of the time-frequency resource elements where f2 and f3 are located are better, the second time-frequency resource grid may be formed by the time-frequency resource elements where f2 and f3 are located.

In some embodiments, time-frequency resource element(s) with better channel quality may be selected from the first time-frequency resource grid based on the channel state information, and the second time-frequency resource grid may be determined based on the selected time-frequency resource element(s). The second time-frequency resource grid includes time-frequency resource element(s) with better channel quality. For example, as shown in FIG. 3B, the channel state information of respective time-frequency resource elements can be compared. If the comparison result shows that the channel quality of time-frequency resource elements (t0, f0), (t0, f1) and (t0, f2) is better, the second time-frequency resource grid may be formed by the time-frequency resource elements (t0, f0), (t0, f1) and (t0, f2).

In step S304, the configuration information of the second DD domain resource grid corresponding to the second OTFS frame is determined according to the second time-frequency resource grid.

The time-domain resource(s), frequency-domain resource(s), or time-frequency resource(s) included in the second time-frequency resource grid may be configured for OTFS data transmission between the first device and the second device.

In some embodiments, the second DD domain resource grid corresponding to the second OTFS frame may be configured based on the second time-frequency resource grid determined from the first time-frequency resource grid. The configuration information of the second DD domain resource grid may include the number M2 of resource elements in the delay dimension and the number N2 of resource elements in the Doppler dimension in the second DD domain resource grid. For example, the number of resource elements in the time dimension of the second time-frequency resource grid is N2 and the number of resource elements in the frequency dimension of the second time-frequency resource grid is M2, and it can be determined that the number of resource elements in the delay dimension of the second DD domain resource grid corresponding to the second time-frequency resource grid is M2, and the number of resource elements in the Doppler dimension of the second DD domain resource grid corresponding to the second time-frequency resource grid is N2.

In some embodiments, the first device may set the second OTFS frame based on the configuration information of the second DD domain resource grid, and use the second OTFS frame to perform OTFS data transmission between the first device and the second device.

In some embodiments, after the configuration information of the second DD domain resource grid is determined, the first device may send first information to the second device. The first information is used to indicate the configuration information of the second DD domain resource grid corresponding to the second OTFS frame. Thus, the second device can use the second OTFS frame to perform OTFS data transmission with the first device.

Since the second time-frequency resource grid is formed by a part of time-frequency resources in the first time-frequency resource grid with better channel quality, the number of time-frequency resource elements included in the second time-frequency resource grid is less than or equal to the number of time-frequency resource elements included in the first time-frequency resource grid. The number N2 of resource elements of the second time-frequency resource grid in the time dimension is less than or equal to the number N1 of resource elements of the first time-frequency resource grid in the time dimension. The number M2 of resource elements of the second time-frequency resource grid in the frequency dimension is less than or equal to the number M1 of resource elements of the first time-frequency resource grid in the frequency dimension. Correspondingly, the number of DD domain resource elements included in the second DD domain resource grid is less than or equal to the number of DD domain resource elements included in the first DD domain resource grid. The number M2 of resource elements of the second DD domain resource grid in the delay dimension is less than or equal to the number M1 of resource elements of the first DD domain resource grid in the delay dimension. The number N2 of resource elements of the second DD domain resource grid in the Doppler dimension is less than or equal to the number N1 of resource elements of the first DD domain resource grid in the Doppler dimension.

Based on the above embodiments, in the OTFS system, channel state information in the time-frequency domain is obtained by performing channel estimation in the DD domain. Based on the channel state information, time-frequency resource(s) with better channel quality in the time-frequency domain is(are) allocated to the terminal to obtain the second time-frequency resource grid. Further, the second DD domain resource grid corresponding to the second OTFS frame is set based on the second time-frequency resource grid. Thus, when OTFS data transmission is performed through the second OTFS frame, the OTFS data can be mapped to time-frequency resource(s) with better channel quality for transmission, thereby improving transmission efficiency.

In some embodiments, the first device may receive, from the second device, a first reference signal sent in the DD domain through the first OTFS frame. The first reference signal will be mapped to each time-frequency resource element of the first time-frequency resource grid corresponding to the first OTFS frame for transmission. The first device may use a preset channel estimation algorithm to perform channel estimation in the DD domain for the received first reference signal to obtain a channel estimation result in the DD domain, and further transform the channel estimation result in the DD domain into channel state information in the time-frequency domain.

The channel estimation result in the DD domain obtained by channel estimation in the DD domain may include a first channel response in the DD domain. The first channel response may be expressed as h(τ, υ), where τ is the delay and υ is the Doppler frequency shift.

A transformation algorithm may be used to transform the first channel response h(τ, υ) in the DD domain to a second channel response H(*t*, *f*) in the time-frequency domain, where t is time and f is frequency. The transformation algorithm may be an ISFFT transformation.

In some embodiments, the first device may receive, from the second device, the first reference signal sent in the DD domain through the first OTFS frame. The first device performs channel estimation in the DD domain on the received first reference signal to obtain a first channel response h(τ, υ) in the DD domain. The first device performs ISFFT transformation on the first channel response to obtain the second channel response H(*t*, *f*) in the time-frequency domain. Based on the second channel response, the first device can obtain the channel state information corresponding to respective time-frequency resource elements in the first time-frequency resource grid corresponding to the first OTFS frame.

The first reference signal may be of various types, such as a Channel State Information Reference Signal (CSI-RS), a Sounding Reference Signal (SRS), or other reference signal(s) that support or is(are) specifically used for channel estimation in the DD domain. No specific limitation is made here.

In some embodiments, the first reference signal may be a pre-coded reference signal, or a reference signal that is not pre-coded.

The timing for the first device and the second device to perform channel estimation in the DD domain using the first OTFS frame may be set according to actual needs. For example, the channel estimation may be performed periodically, or the channel estimation may be based on a pre-set trigger condition, where the first reference signal is sent using the first OTFS frame to perform channel estimation when the trigger condition is satisfied.

The trigger condition may be of various types, such as cell handover, bit error rate reaching a threshold, etc.

In some embodiments, the first device and the second device may periodically perform channel estimation in the DD domain by sending the first reference signal through the first OTFS frame to obtain the channel state information in the time-frequency domain. Based on the channel state information in the time-frequency domain, time-frequency resources with better channel quality are periodically selected from the first time-frequency resource grid corresponding to the first OTFS frame to update the second time-frequency resource grid. Based on the updated second time-frequency resource grid, the second OTFS frame is configured to perform OTFS data transmission. Accordingly, the first device and the second device can use the updated second OTFS frame to perform OTFS data transmission, enabling the OTFS data to be mapped to time-frequency resources with better channel quality for transmission.

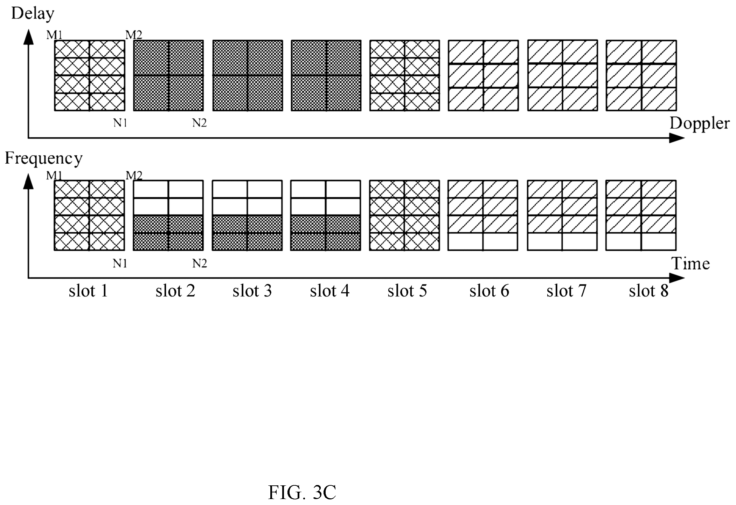

For example, as shown in FIG. 3C, the configuration information of the first OTFS frame is used to transmit the first reference signal every three slots. The first OTFS frame is used to transmit the first reference signal in slot 1 and slot 5, respectively. The first DD domain resource grid DD0 corresponding to the first OTFS frame is M1=4 in a delay dimension and N1=2 in a Doppler dimension. The corresponding first time-frequency resource grid TF0 is N1=2 in a time dimension and M1=4 in a frequency dimension.

According to the channel state information in the time-frequency domain obtained by channel estimation on the first reference signal transmitted in slot 1, two lower time-frequency resource elements in the frequency dimension are selected as having better channel quality. The two lower time-frequency resource elements in the frequency dimension form a second time-frequency resource grid TF1. The second time-frequency resource grid TF1 is N2=2 in the time dimension and M2=2 in the frequency dimension. It can be further determined that the second DD domain resource grid DD1 corresponding to the second time-frequency resource grid TF1 is M2 =2 in the delay dimension and N2=2 in the Doppler dimension. Therefore, in slots 2 to 4, the second OTFS frame corresponding to the second DD domain resource grid DD1 can be used to perform OTFS data transmission, so that the OTFS data is mapped to the time-frequency resources in the second time-frequency resource grid TF1 for transmission.

According to the channel state information in the time-frequency domain obtained by channel estimation on the first reference signal transmitted in slot 5, two lower time-frequency resource elements in the frequency dimension are selected as having better channel quality. The three upper time-frequency resource elements in the frequency dimension form a second time-frequency resource grid TF2. The second time-frequency resource grid TF2 is N2=2 in the time dimension and M2=3 in the frequency dimension. It can be further determined that the second DD domain resource grid DD2 corresponding to the second time-frequency resource grid TF2 is M2 =3 in the delay dimension and N2=2 in the Doppler dimension. Therefore, in slots 6 to 8, the second OTFS frame corresponding to the new second DD domain resource grid DD2 can be used to perform OTFS data transmission, so that the OTFS data can be mapped to the time-frequency resources in the second time-frequency resource grid TF2 for transmission.

In some embodiments, since it is not necessarily possible to immediately use the second OTFS frame corresponding to the second DD domain resource grid to perform OTFS data transmission after determining the new second DD domain resource grid through channel estimation, first time corresponding to the second OTFS frame can be determined before OTFS data transmission through the second OTFS frame. The first time is the time at which data transmission is performed using the second OTFS frame. Then, when the first time is reached, the first device and the second device configure the second OTFS frame to perform OTFS data transmission based on the new second DD domain resource grid.

The first time may also be referred to as application time of the second OTFS frame. The first time may include at least one of: a starting time moment at which data transmission is started using the second OTFS frame; a time interval for data transmission using the second OTFS frame; usage period information of the second OTFS frame, etc. For simplicity, the following embodiments will use the starting time moment at which data transmission is started using the second OTFS frame as an example.

The first time may be preset. For example, the first time may be preset to start being used in the second slot after the channel estimation is completed; or the first time may be indicated by a specific message. For example, in some embodiments, the first time may be indicated by at least one of: a Radio Resource Control (RRC) message; Medium Access Control-Control Element (MAC-CE); Downlink Control Information (DCI).

In some embodiments, the first device may send the first time corresponding to the second OTFS frame to the second device through first information.

In some embodiments, the first device may send the first time corresponding to the second OTFS frame to the second device, and the first time is carried by one of: an RRC message; MAC-CE; DCI.

In some embodiments, the first device may obtain the first time corresponding to the second OTFS frame from the second device, and the first time may be carried by one of: an RRC message; MAC-CE; DCI.

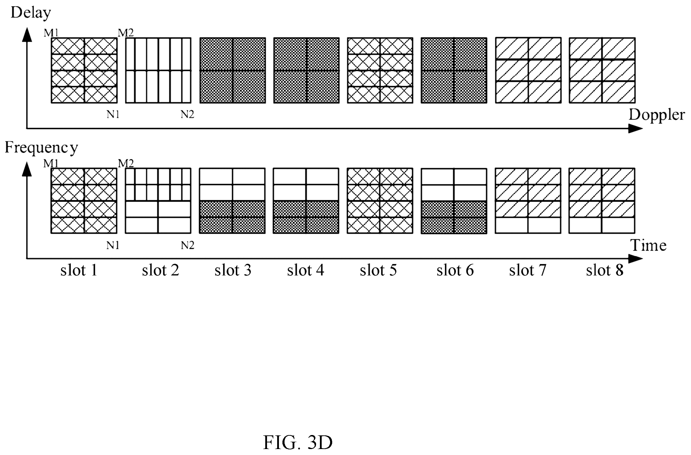

For example, as shown in FIG. 3D, if the first time corresponding to the second OTFS frame is determined to be the second slot after channel estimation is completed, channel estimation is performed through the first OTFS frame then in slot 1, and after the second time-frequency resource grid TF1 is determined from the first time-frequency resource grid TF0, the second OTFS obtained from the previous channel estimation is still used in slot 2 to perform OTFS data transmission. After slot 3, the second OTFS corresponding to the second time-frequency resource grid TF1 is used to perform OTFS data transmission. In slot 5, channel estimation is performed through the first OTFS, and after the second time-frequency resource grid TF2 is determined from the first time-frequency resource grid TF0, the second OTFS corresponding to the second time-frequency resource grid TF1 is still used in slot 6 to perform OTFS data transmission. After slot 7, the second OTFS corresponding to the second time-frequency resource grid TF2 is used to perform OTFS data transmission.

It should be noted that the first reference signal(s) transmitted through the first OTFS frame may be one reference signal or multiple reference signals; the first reference signal may occupy only one or more DD domain resource elements in the first DD domain resource grid, and the remaining DD domain resource elements may be used to for OTFS data transmission.

Based on the above embodiments, channel state information in the time-frequency domain is obtained by periodically performing channel estimation in the DD domain. Based on the channel state information, the second time-frequency resource grid is obtained from the time-frequency resource(s) with better channel quality in the time-frequency domain. The second DD domain resource grid corresponding to the second OTFS frame is further set based on the second time-frequency resource grid. Thus, when OTFS data transmission is performed through the second OTFS frame, the OTFS data can be mapped to time-frequency resource(s) with better channel quality for transmission, thereby improving transmission efficiency.

The first device and the second device may be a terminal or a network device.

In some embodiments, the first device is a network device, and the second device is a terminal. The method of resource allocation for OTFS includes the following steps:
A1. The terminal obtains the configuration information of the first OTFS frame. The configuration information of the first OTFS frame may be used to indicate the first DD domain resource grid DD0 corresponding to the first OTFS frame, and the first time-frequency resource grid TF0 corresponding to the first OTFS frame. The resource element data of the first DD domain resource grid DD0 in the delay dimension is M1, and the resource element data in the Doppler dimension is N1; the resource element data of the first time-frequency resource grid TF0 in the time dimension is N1, and the resource element data in the frequency dimension is M1.
A2. The terminal uses the first OTFS frame to send the first reference signal to the network device for channel estimation. The first reference signal may be SRS.
A3. The network device performs channel estimation based on the received first reference signal to obtain the first channel response h(τ, υ) in the DD domain; the first channel response is transformed into a second channel response H(*t*, *f*) in the time-frequency domain through ISFFT; based on the second channel response, the channel state information corresponding to respective time-frequency resource elements in the first time-frequency resource grid TF0 may be obtained.
A4. Based on channel state information all or a part of time-frequency resource elements with better channel quality are selected from the first time-frequency resource grid TF0 to form the second time-frequency resource grid TF1; the time-frequency resources included in the second time-frequency resource grid TF1 are allocatred to the terminal.

It should be noted that different time-domain resources, frequency-domain resources, or time-frequency resources are allocated to different terminals; the same time-domain resources, frequency-domain resources, or time-frequency resources are allocated to the same or different terminals; the time-domain resources, frequency-domain resources, or time-frequency resources allocated to different terminals may be the same or partially the same.

A5. The network device sends configuration information of the second OTFS frame and the first time corresponding to the second OTFS frame to the terminal. The configuration information of the second OTFS frame may be used to indicate the second DD domain resource grid DD1 corresponding to the second OTFS frame and the second time-frequency resource grid TF1 corresponding to the second OTFS frame. The resource element data of the second DD domain resource grid DD1 in the delay dimension is M2 and the resource element data in the Doppler dimension is N2; the resource element data of the second time-frequency resource grid TF1 in the time dimension is N2 and the resource element data in the frequency dimension is M2; where M2 ≤ M1, N2 ≤ N1.

A6. At the first time, the terminal uses the second OTFS frame to send OTFS data to the network device. The OTFS data can be mapped to the time-frequency resource elements included in the second time-frequency resource grid TF1 with lower channel quality and sent to the network device, thereby improving the efficiency of data transmission.

In some embodiments, the first device is a terminal, and the second device is a network device. The method of resource allocation for OTFS includes the following steps:

B1. The terminal obtains the configuration information of the first OTFS frame. The configuration information of the first OTFS frame may be used to indicate the first DD domain resource grid DD0 corresponding to the first OTFS frame, and the first time-frequency resource grid TF0 corresponding to the first OTFS frame. The resource element data of the first DD domain resource grid DD0 in the delay dimension is M1, and the resource element data in the Doppler dimension is N1; the resource element data of the first time-frequency resource grid TF0 in the time dimension is N1, and the resource element data in the frequency dimension is M1.

B2. The network device uses the first OTFS frame to send the first reference signal to the terminal for channel estimation. The first reference signal may be CSI-RS.

B3. The terminal performs channel estimation based on the received first reference signal to obtain the first channel response h(τ, υ) in the DD domain; the first channel response is transformed into the second channel response H(t, *f*) in the time-frequency domain through ISFFT; based on the second channel response, the channel state information corresponding to respective time-frequency resource elements in the first time-frequency resource grid TF0 may be obtained.

B4. Based on channel state information, all or a part of the time-frequency resource elements with better channel quality are selected from the first time-frequency resource grid TF0 to form the second time-frequency resource grid TF1; the time-frequency resources included in the second time-frequency resource grid TF1 are allocated to the terminal.

It should be noted that different time-domain resources, frequency-domain resources, or time-frequency resources are allocated to different terminals; the same time-domain resources, frequency-domain resources, or time-frequency resources are allocated to the same or different terminals; the time-domain resources, frequency-domain resources, or time-frequency resources allocated to different terminals may be the same or partially the same.

B5. The terminal sends configuration information of the second OTFS frame and the first time corresponding to the second OTFS frame to the network device. The configuration information of the second OTFS frame may be used to indicate the second DD domain resource grid DD1 corresponding to the second OTFS frame and the second time-frequency resource grid TF1 corresponding to the second OTFS frame. The resource element data of the second DD domain resource grid DD1 in the delay dimension is M2 and the resource element data in the Doppler dimension is N2; the resource element data of the second time-frequency resource grid TF1 in the time dimension is N2 and the resource element data in the frequency dimension is M2; where M2 ≤ M1, N2 ≤ N1.

The first time may also be sent to the terminal by the network device.

B6. At the first time, the network device uses the second OTFS frame to send OTFS data to the terminal. The OTFS data can be mapped to the time-frequency resource elements included in the second time-frequency resource grid TF1 with lower channel quality and sent to the terminal, thereby improving the efficiency of data transmission.

It should be noted that the embodiments shown in FIG. 3A to FIG. 3D can be implemented independently or in combination with at least one other embodiment of the present disclosure. The specific choice can be made as needed, and the present disclosure does not impose limitations on this.

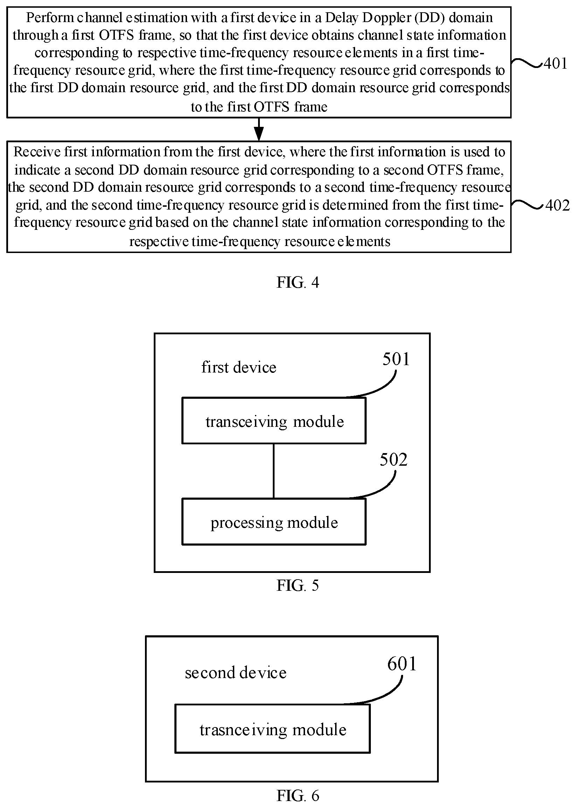

An embodiment of the present disclosure provides a method of resource allocation for OTFS. FIG. 4 is a schematic flowchart of a method of resource allocation for OTFS according to an embodiment of the present disclosure. The method of resource allocation for OTFS shown in this embodiment may be executed by a second device. The second device may be a terminal or a network device.

As shown in FIG. 4, the method of resource allocation for OTFS may include the following steps:

In step S401, channel estimation is performed with the first device in the Delay Doppler (DD) domain through the first OTFS frame, so that the first device obtains channel state information corresponding to respective time-frequency resource elements in the first time-frequency resource grid. The first time-frequency resource grid corresponds to the first DD domain resource grid, and the first DD domain resource grid corresponds to the first OTFS frame.

In step S402, first information is received from the first device. The first information is used to indicate a second DD domain resource grid corresponding to a second OTFS frame. The second DD domain resource grid corresponds to the second time-frequency resource grid. The second time-frequency resource grid is determined from the first time-frequency resource grid based on the channel state information corresponding to respective time-frequency resource elements.

In some embodiments, the second device may perform channel estimation with the first device, so that the first device may obtain the channel quality between the first device and the second device in the time-frequency domain based on the channel estimation result. The channel quality in the time-frequency domain may be represented by the channel state information of respective time-frequency resource elements.

In some embodiments, the second device may perform channel estimation in the DD domain with the first device through a pre-configured first OTFS frame, so that the first device may obtain the channel state information corresponding to respective time-frequency resource elements in the first time-frequency resource grid corresponding to the first OTFS frame based on the channel estimation result.

Before performing channel estimation in the DD domain, the second device may first obtain the configuration information of the first OTFS frame. The configuration information is used to indicate the first DD domain resource grid corresponding to the first OTFS frame. For example, the configuration information may indicate the number M1 of resource elements in the delay dimension and the number N1 of resource elements in the Doppler dimension in the first DD domain resource grid, and it can be determined that the first DD domain resource grid includes M1*N1 DD domain resource elements.

The configuration information of the first OTFS frame may also be used to indicate the first time-frequency resource grid corresponding to the first OTFS frame. The first DD domain resource grid corresponds to the first time-frequency domain resource grid. For example, the first DD domain resource grid is an M1*N1 DD domain resource grid, and the first time-frequency resource grid corresponding to the first DD domain resource grid has N1 resource elements in the time dimension and M1 resource elements in the frequency dimension, and the first time-frequency resource grid includes M1*N1 time-frequency resource elements.

The second device performs channel estimation with the first device through the first OTFS frame, so that the first device may determine the channel state information of each time-frequency resource element in the M1*N1 time-frequency resource elements included in the first time-frequency resource grid based on the channel estimation result.

In some embodiments, the second device sends the first reference signal to the first device in the Delay Doppler (DD) domain through the first OTFS frame to perform channel estimation, so that the first device obtains the first channel response in the DD domain. Further, the first channel response is transformed to the second channel response in the TF domain using a transformation algorithm, and further, channel state information corresponding to respective time-frequency resource elements in the first time-frequency resource grid is obtained based on the second channel response.

In some embodiments, the transformation algorithm includes ISFFT.

In some embodiments, the first reference signal includes at least one of: a Channel State Information Reference Signal (CSI-RS); a Sounding Reference Signal (SRS); or other reference signal.

In some embodiments, the first reference signal may be pre-coded, or the first reference signal may not be pre-coded.

In some embodiments, the second time-frequency resource grid includes time-frequency resource elements with better channel quality in the first time-frequency resource grid.

In some embodiments, the second time-frequency resource grid includes time-domain resources with better channel quality in the first resource grid.

In some embodiments, the second time-frequency resource grid includes frequency-domain resources with better channel quality in the first resource grid.

In some embodiments, the second time-frequency resource grid includes time-frequency resources with better channel quality in the first resource grid.

In some embodiments, the number of DD domain resource elements included in the second DD domain resource grid is not greater than the number of DD domain resource elements included in the first DD domain resource grid.

In some embodiments, the first information includes at least one of: the number of resource elements of the second DD domain resource grid in the delay dimension; the number of resource elements of the second DD domain resource grid in the Doppler dimension.

In some embodiments, the number of resource elements of the second DD domain resource grid in the delay dimension is not greater than the number of resource elements of the first DD domain resource grid in the delay dimension; the number of resource elements of the second DD domain resource grid in the Doppler dimension is not greater than the number of resource elements of the first DD domain resource grid in the Doppler dimension.

In some embodiments, the second device may receive first information from the first device. The first information is used to indicate configuration information of the second DD domain resource grid corresponding to the second OTFS frame. The second device may configure the second OTFS frame based on the received configuration information of the second DD domain resource grid to use the second OTFS frame to perform OTFS data transmission with the first device.

In some embodiments, the method further includes: determining first time corresponding to the second OTFS frame; wherein the first time is the time at which data transmission is performed using the second OTFS frame; and performing OTFS data transmission with the first device through the second OTFS frame at the first time.

In some embodiments, the first time is carried by at least one of: a Radio Resource Control (RRC) message; Medium Access Control Control Element (MAC-CE) message; Downlink Control Information (DCI).

In some embodiments, the first information received by the second device from the first device may also be used to indicate the first time.

In some embodiments, the second device may send the first time corresponding to the second OTFS frame to the first device, and the first time is carried by one of: the RRC message; MAC-CE; DCI.

In some embodiments, the second device may obtain the first time from the first device, and the first time may be carried by one of: the RRC message; MAC-CE; DCI.

It should be noted that the embodiment shown in FIG. 4 can be implemented independently or in combination with at least one other embodiment in the present disclosure. The specific choice can be made as needed, and the present disclosure does not impose specific limitation on this.

According to embodiments of the present disclosure, the terminal may record slice-related information and further send the slice-related information to the network device. Based on this, the network device can comprehensively determine the suitability of a slice for the terminal, thereby rationally deploying slice(s) to provide services for the terminal service and ensuring good communication performance for the services.

In some embodiments, channel state information in the time-frequency domain is obtained by periodically performing channel estimation in the DD domain. Based on the channel state information, the second time-frequency resource grid is obtained from the time-frequency resources with better channel quality in the time-frequency domain. Further, the second DD domain resource grid corresponding to the second OTFS frame is set based on the second time-frequency resource grid. Thus, when OTFS data transmission is performed through the second OTFS frame, the OTFS data can be mapped to time-frequency resources with better channel quality for transmission, thereby improving transmission efficiency.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "code element(symbol)", "codebook", "codeword", "codepoint", "bit", "data", "program", "chip", etc., may be used interchangeably.

In some embodiments, terms such as "time moment", "time point", "time", "time location", etc., may be used interchangeably, and terms such as "duration", "period of time", "time window", "window", "time", etc. may be used interchangeably.

In some embodiments, terms such as "Component Carrier (CC)", "cell", "frequency carrier", "carrier frequency", etc., may be used interchangeably.

In some embodiments, "get", "obtain", "acquire", "receive", "transmission", "bidirectional transmission", "send and/or receive" may be used interchangeably and may be interpreted as receiving from other entity(entities), obtaining from a protocol, obtaining from higher layer, obtaining through self-processing, or autonomous implementation, etc.

In some embodiments, terms such as "send," "transmit," "report," "deliver", "transmission", "bidirectional transmission", "send and/or receive", etc., may be used interchangeably.

Corresponding to the aforementioned embodiments of the method of resource allocation for OTFS, the present disclosure also provides embodiments of a terminal and a network device.

FIG. 5 is a schematic block diagram of an apparatus structure of a terminal according to an embodiment of the present disclosure. As shown in FIG. 5, the first device may be an apparatus of resource allocation for OTFS. The apparatus includes a transceiving module 501 and a processing module 502.

In some embodiments, the transceiving module 501 is configured to perform channel estimation with a second device in a Delay Doppler (DD) domain through a first OTFS frame. The processing module 502 is configured to determine channel state information corresponding to respective time-frequency resource elements in a first time-frequency resource grid. The first time-frequency resource grid corresponds to a first DD domain resource grid, and the first DD domain resource grid corresponds to the first OTFS frame. The processing module 502 is further configured to: determine a second time-frequency resource grid from the first time-frequency resource grid based on the channel state information corresponding to respective time-frequency resource elements; and determine a second DD domain resource grid corresponding to a second OTFS frame based on the second time-frequency resource grid.

In some embodiments, the transceiving module 501 is configured to receive, from the second device, a first reference signal sent in the Delay Doppler (DD) domain through the first OTFS frame. The processing module 502 is configured to: perform channel estimation based on the first reference signal; determine a first channel response in the DD domain; determine the first channel response to a second channel response in a TF domain using a transformation algorithm; and determine channel state information corresponding to respective time-frequency resource elements in the first time-frequency resource grid based on the second channel response.

In some embodiments, the transformation algorithm includes ISFFT.

In some embodiments, the first reference signal includes at least one of: a Channel State Information Reference Signal (CSI-RS); a Sounding Reference Signal (SRS); a reference signal for performing channel estimation in the DD domain.

In some embodiments, the first reference signal may be pre-coded, or may not be pre-coded.

In some embodiments, the second time-frequency resource grid includes time-frequency resource elements with better channel quality in the first time-frequency resource grid.

In some embodiments, the number of DD domain resource elements included in the second DD domain resource grid is not greater than the number of DD domain resource elements included in the first DD domain resource grid.

In some embodiments, the processing module 502 is further configured to: determine the number of resource elements in the second DD domain resource grid in the delay dimension; and/or determine the number of resource elements in the second DD domain resource grid in the Doppler dimension.

In some embodiments, the number of resource elements in the second DD domain resource grid in the delay dimension is not greater than the number of resource elements in the first DD domain resource grid in the delay dimension; the number of resource elements in the second DD domain resource grid in the Doppler dimension is not greater than the number of resource elements in the first DD domain resource grid in the Doppler dimension.

In some embodiments, the transceiving module 501 is further configured to determine first time corresponding to the second OTFS frame; wherein the first time is the time at which data transmission is performed using the second OTFS frame; and perform OTFS data transmission with the second device through the second OTFS frame at the first time.

In some embodiments, the first time is carried by at least one of: a Radio Resource Control (RRC) message; Medium Access Control Control Element (MAC-CE); Downlink Control Information (DCI).

In some embodiments, the transceiving module 501 is further configured to send first information to the second device. The first information is used to indicate the configuration information of the second DD domain resource grid corresponding to the second OTFS frame.

It should be noted that modules included in the first device are not limited to those described in the above embodiments, and may also include other module(s), such as a storage module, a display module, etc.

FIG. 6 is a schematic block diagram of an apparatus structure of a second device according to an embodiment of the present disclosure. As shown in FIG. 6, the second device may be an apparatus of resource allocation for OTFS. The apparatus includes a transceiving module 601.

In some embodiments, the transceiving module 601 is configured to perform channel estimation with a first device in a Delay Doppler (DD) domain through a first OTFS frame, so that the first device obtains channel state information corresponding to respective time-frequency resource elements in the first time-frequency resource grid. The first time-frequency resource grid corresponds to the first DD domain resource grid, and the first DD domain resource grid corresponds to the first OTFS frame. The transceiving module 601 is further configured to receive first information from the first device. The first information is used to indicate a second DD domain resource grid corresponding to the second OTFS frame. The second DD domain resource grid corresponds to the second time-frequency resource grid. The second time-frequency resource grid is determined from the first time-frequency resource grid based on the channel state information corresponding to respective time-frequency resource elements.

In some embodiments, the transceiving module 601 is configured to send a first reference signal to the first device in the Delay Doppler (DD) domain through the first OTFS frame to perform channel estimation, so that the first device obtains a first channel response in the DD domain, and transforms the first channel response to a second channel response in the TF domain through a transformation algorithm, and further obtains channel state information corresponding to each time-frequency resource element in the first time-frequency resource grid based on the second channel response.

In some embodiments, the transformation algorithm includes ISFFT.

In some embodiments, the first reference signal includes at least one of: a Channel State Information Reference Signal (CSI-RS); a Sounding Reference Signal (SRS); other reference signal(s).

In some embodiments, the first reference signal may be pre-coded, or may not be pre-coded.

In some embodiments, the second time-frequency resource grid includes time-frequency resource elements with better channel quality in the first time-frequency resource grid.

In some embodiments, the number of DD domain resource elements included in the second DD domain resource grid is not greater than the number of DD domain resource elements included in the first DD domain resource grid.

In some embodiments, the first information includes at least one of: the number of resource elements in the second DD domain resource grid in the delay dimension; the number of resource elements in the second DD domain resource grid in the Doppler dimension.

In some embodiments, the number of resource elements in the second DD domain resource grid in the delay dimension is not greater than the number of resource elements in the first DD domain resource grid in the delay dimension; the number of resource elements in the second DD domain resource grid in the Doppler dimension is not greater than the number of resource elements in the first DD domain resource grid in the Doppler dimension.

In some embodiments, the transceiving module 601 is further configured to determine first time corresponding to the second OTFS frame, wherein the first time is the time at which data transmission is performed using the second OTFS frame; and perform OTFS data transmission with the first device through the second OTFS frame at the first time.

In some embodiments, the first time is carried by at least one of: a Radio Resource Control (RRC) message; Medium Access Control Control Element (MAC-CE) message; Downlink Control Information (DCI).

It should be noted that the modules included in the second device are not limited to those described in the above embodiments, and may also include other module(s), such as a storage module, a display module, etc.

For the apparatus embodiments, since they basically correspond to the method embodiments, regarding relevant parts, reference may be made to part of description of the method embodiments. The apparatus embodiments described above are merely illustrative. The modules described as separate components may or may not be physically separate, and the components shown as modules may or may not be physical modules; that is, they may be located in one place or distributed across multiple network modules. Some or all of the modules can be selected to achieve the purpose(s) of the embodiments according to actual needs. Those skilled in the art can understand and implement the embodiments without creative effort.

An embodiment of the present disclosure further provides a terminal, including: one or more processors; and a memory coupled to the processor(s). The memory stores executable instructions. When the executable instructions are executed by the processor(s), the terminal is caused to perform the method of resource allocation for OTFS described in the above embodiments.

An embodiment of the present disclosure also provides a network device, including: one or more processors; and a memory coupled to the processor(s). The memory stores executable instructions. When the executable instructions are executed 'by the processor(s), the network device is caused to perform the method of resource allocation for OTFS described in the above embodiments.

An embodiment of the present disclosure also provides a communication device, including: one or more processors; and a memory coupled to the processor(s). The memory stores executable instructions. When the executable instructions are executed by the processor(s), the processor(s) is(are) caused to invoke the executable instructions to cause the communication device to perform the method of resource allocation for OTFS described in the optional embodiments above.

An embodiment of the present disclosure further provides a communication system, including a terminal and a network device. The terminal is configured to perform the method of resource allocation for OTFS described in the optional embodiments of the first device, and the network device is configured to perform the method of resource allocation for OTFS described in the optional embodiments of the second device.

An embodiment of the present disclosure further provides a communication system, including a terminal and a network device. The terminal is configured to perform the method of resource allocation for OTFS described in the optional embodiments of the second device, and the network device is configured to implement the method of resource allocation for OTFS described in the optional embodiments of the first device.

An embodiment of the present disclosure further provides a storage medium storing instructions. When the instructions are run on a communication device, the communication device is caused to perform the method of resource allocation for OTFS described in the optional embodiments above.

An embodiment of the present disclosure further provides an apparatus for implementing any one of the above methods. For example, an apparatus is provided. The apparatus includes units or modules for implementing the steps performed by the terminal in any one of the above methods. As another example, another apparatus is provided. The apparatus includes units or modules for implementing the steps performed by a network device (e.g., an access network device, a core network function node, or a core network device, etc.) in any one of the above methods.

It should be understood that the division of units or modules in the above apparatus is only a logical functional division. In actual implementations, the units or modules may be fully or partially integrated into a physical entity, or the units or modules may be physically separated. Furthermore, the units or modules in the apparatus may be implemented in a form of a processor invoking software. For example, the apparatus includes a processor connected to a memory, and instructions are stored in the memory. The processor invokes the instructions stored in the memory to implement any one of the above methods or to implement the functions of the units or modules in the above apparatus. The processor may be, for example, a general-purpose processor, such as a Central Processing Unit (CPU) or a microprocessor, and the memory may be a memory within the apparatus, or a memory outside the apparatus. Alternatively, the units or modules in the apparatus may be implemented in a form of hardware circuit(s). The functions of a part or all of the units or modules may be implemented through a design of the hardware circuit(s). The hardware circuit(s) may be understood as one or more processors. For example, in an implementation, the hardware circuit is an Application-Specific Integrated Circuit (ASIC), and the functions of a part or all of the units or modules can be implemented through the design of a logical relationship between components within the circuit. In another implementation, the hardware circuit may be implemented using a Programmable Logic Device (PLD), such as a Field-Programmable Gate Array (FPGA), which may include a large number of logic gate circuits. A connection relationship between the logic gate circuits is configured through a configuration file, achieving the functions of a part or all of the units or modules. All units or modules of the apparatus may be implemented entirely through the form of processor invoking software, or may be implemented entirely through the form of hardware circuit(s), or may be implemented partially through the form of processor invoking software, with the remaining part implemented through the form of hardware circuit(s).

In an embodiment of the present disclosure, the processor is a circuit with signal processing capabilities. In an implementation, the processor may be a circuit with instruction read and execution capabilities, such as a Central Processing Unit (CPU), a microprocessor, a Graphics Processing Unit (GPU) (which may be understood as a microprocessor), or a Digital Signal Processor (DSP), etc. In another implementation, the processor may implement certain functions through a logical relationship between hardware circuits. The logical relationship between the hardware circuits is fixed or reconfigurable. For example, the processor is a hardware circuit implemented using an Application-Specific Integrated Circuit (ASIC) or a Programmable Logic Device (PLD), such as an FPGA. In a reconfigurable hardware circuit, a procedure in which the processor loads a configuration file to realize the configuration of the hardware circuit can be understood as a procedure in which the processor loads instructions to implement the functions of a part or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep learning Processing Unit (DPU), etc.

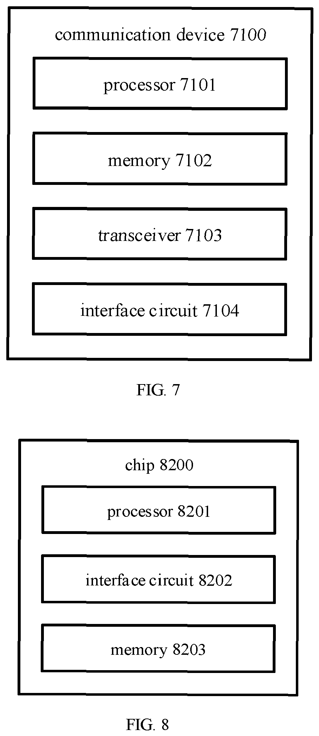

FIG. 7 is a schematic diagram of the structure of a communication device 7100 according to an embodiment of the present disclosure. The communication device 7100 may be a network device (e.g., an access network device or a core network device, etc.), or may be a terminal (e.g., user equipment, etc.), or may be a chip, chip system, or processor, etc., that supports the network device in implementing any one of the above methods, or may be a chip, chip system, or processor, etc., that supports the terminal in implementing any one of the above methods. The communication device 7100 may be used to implement the methods described in the above method embodiments; for details, reference may be made to the descriptions in the above method embodiments.

As shown in FIG. 7, the communication device 7100 includes one or more processors 7101. The processor 7101 can be a general-purpose processor or a dedicated processor, such as a baseband processor or a central processor. The baseband processor may be used to process communication protocols and communication data, and the central processor may be used to control a communication device (e.g., a base station, a baseband chip, a terminal device, a terminal device chip, a DU or a CU, etc.), execute programs, and process program data. The processor 7101 is used to invoke instructions to cause the communication device 7100 to perform any one of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the communication steps such as sending and receiving in the above methods are performed by the transceivers 7103, and other steps are performed by the processor(s) 7101.

In some embodiments, the transceiver may include a receiver and a sender. The receiver and the sender may be separate or integrated. Optionally, the terms such as transceiver, transceiving unit, transceiving machine, transceiving circuit, etc., may be used interchangeably; terms such as sender, sending unit, sending machine, sending circuit, etc., may be used interchangeably; and terms such as receiver, receiving unit, receiving machine, receiving circuit, etc., may be used interchangeably.

Optionally, the communication device 7100 further includes one or more interface circuits 7104, which are connected to the memory 7102. The interface circuits 7104 may be used to receive signals from the memory 7102 or other device(s), and may be used to send signals to the memory 7102 or other device(s). For example, the interface circuits 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7. The communication device may be a standalone device or a part of a larger device. For example, the communication device may be: (1) a standalone integrated circuit IC, or a chip, or a chip system or a subsystem; (2) a collection of one or more ICs, optionally, the IC collection may also include a storage component for storing data or programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 8 is a schematic diagram of the structure of a chip 8200 according to an embodiment of the present disclosure. For a case where the communication device 7100 may be a chip or a chip system, reference may be made to the schematic diagram of the structure of chip 8200 shown in FIG. 8, but the present disclosure is not limited to this.

The chip 8200 includes one or more processors 8201, which are used to invoke instructions to cause the chip 8200 to perform any one of the above methods.

In some embodiments, the chip 8200 further includes one or more interface circuits 8202 connected to a memory 8203. The interface circuits 8202 may be used to receive signals from the memory 8203 or other device(s), and may also be used to
send signals to the memory 8203 or other device(s). For example, the interface circuits 8202 may read instructions stored in the memory 8203 and send the instructions to the processor(s) 8201. Optionally, terms such as interface circuit, interface, transceiving pin, transceiver, etc., may be used interchangeably.

In some embodiments, the chip 8200 further includes one or more memories 8203 for storing instructions. Optionally, all or part of the memories 8203 may be located outside of the chip 8200.

The present disclosure further provides a storage medium storing instructions. When the instructions run on the communication device 7100, the communication device 7100 is caused to perform any one of the methods described above. Optionally, the storage medium is an electronic storage medium. Optionally, the storage medium is a computer-readable storage medium, but it is not limited thereto, and may also be a storage medium readable by other device(s). Optionally, the storage medium may be a non-transitory storage medium, but it is not limited thereto, and may also be a transitory storage medium.

The present disclosure further provides a program product. When the program product is executed by the communication device 7100, the communication device 7100 is caused to perform any one of the above methods. Optionally, the program product is a computer program product.

The present disclosure also provides a computer program. When the computer program runs on a computer, the computer is caused to perform any one of the above methods.

## Claims

1. A method of resource allocation for Orthogonal Time Frequency Space (OTFS), performed by a first device, the method comprising:
performing channel estimation with a second device in a Delay Doppler (DD) domain through a first OTFS frame;
determining channel state information corresponding to respective time-frequency resource elements in a first time-frequency resource grid;
wherein the first time-frequency resource grid corresponds to a first DD domain resource grid, and the first DD domain resource grid corresponds to the first OTFS frame;
according to the channel state information corresponding to the respective time-frequency resource elements, determining a second time-frequency resource grid from the first time-frequency resource grid; and
determining a second DD domain resource grid corresponding to a second OTFS frame according to the second time-frequency resource grid.

2. The method according to claim 1, wherein performing the channel estimation with the second device in the Delay Doppler (DD) domain through the first OTFS frame comprises:
receiving, from the second device, a first reference signal sent in the Delay Doppler (DD) domain through the first OTFS frame; and
performing channel estimation according to the first reference signal;
wherein determining the channel state information corresponding to the respective time-frequency resource elements in the first time-frequency resource grid comprises:
determining a first channel response in the DD domain;
determining the first channel response to a second channel response in a time-frequency domain through a transformation algorithm; and
determining the channel state information according to the second channel response.

3. The method according to claim 2, wherein the transformation algorithm comprises Inverse Sympletic Fourier Transform ISFFT.

4. The method according to claim 2, wherein the first reference signal comprises at least one of:
a Channel State Information Reference Signal (CSI-RS);
a Sounding Reference Signal (SRS);
a reference signal for channel estimation in the DD domain.

5. The method according to any one of claims 1 to 4, wherein the number of DD domain resource elements comprised in the second DD domain resource grid is not greater than the number of DD domain resource elements comprised in the first DD domain resource grid.

6. The method according to any one of claims 1 to 5, further comprising:
determining the number of resource elements in the second DD domain resource grid in a delay dimension; and/or
determining the number of resource elements in the second DD domain resource grid in a Doppler dimension.

7. The method according to claim 6, wherein:
the number of resource elements in the second DD domain resource grid in the delay dimension is not greater than the number of resource elements in the first DD domain resource grid in the delay dimension;
the number of resource elements in the second DD domain resource grid in the Doppler dimension is not greater than the number of resource elements in the first DD domain resource grid in the Doppler dimension.

8. The method according to any one of claims 1 to 7, further comprising:
determining first time corresponding to the second OTFS frame, wherein the first time is time at which data transmission is performed using the second OTFS frame; and
performing OTFS data transmission with the second device through the second OTFS frame at the first time.

9. The method according to claim 8, wherein the first time is carried by at least one of:
a Radio Resource Control (RRC) message;
Medium Access Control-Control Element (MAC-CE);
Downlink Control Information (DCI).

10. The method according to any one of claims 1 to 9, further comprising:
sending first information to the second device, wherein the first information is used to indicate configuration information of the second DD domain resource grid.

11. The method according to any one of claims 1 to 10, wherein:
the first device is a terminal, and the second device is a network device; or
the first device is the network device, and the second device is the terminal.

12. A method of resource allocation for Orthogonal Time Frequency Space (OTFS), performed by a second device, the method comprising:
performing channel estimation with a first device in a Delay Doppler (DD) domain through a first OTFS frame, so that the first device obtains channel state information corresponding to respective time-frequency resource elements in a first time-frequency resource grid;
wherein the first time-frequency resource grid corresponds to a first DD domain resource grid, and the first DD domain resource grid corresponds to the first OTFS frame;
receiving first information from the first device;
wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

13. The method according to claim 12, wherein performing channel estimation with the first device in the Delay Doppler (DD) domain through the first OTFS frame comprises:
sending, to the first device, a first reference signal in the Delay Doppler (DD) domain through the first OTFS frame to perform channel estimation, so that the first device obtains a first channel response in the Delay Doppler (DD) domain, determines the first channel response to a second channel response in a time-frequency domain through a transformation algorithm, and further determines the channel state information according to the second channel response.

14. The method according to claim 13, wherein the transformation algorithm comprises Inverse Sympletic Fourier Transform ISFFT.

15. The method according to claim 13 or 14, wherein the first reference signal comprises at least one of:
a Channel State Information Reference Signal (CSI-RS);
a Sounding Reference Signal (SRS);
other reference signal.

16. The method according to any one of claims 12 to 15, wherein the number of DD domain resource elements comprised in the second DD domain resource grid is not greater than the number of DD domain resource elements comprised in the first DD domain resource grid.

17. The method according to any one of claims 12 to 16, wherein the first information comprises at least one of:
the number of resource elements in the second DD domain resource grid in a delay dimension;
the number of resource elements in the second DD domain resource grid in a Doppler dimension.

18. The method according to claim 17, wherein:
the number of resource elements in the second DD domain resource grid in the delay dimension is not greater than the number of resource elements in the first DD domain resource grid in the delay dimension;
the number of resource elements in the second DD domain resource grid in the Doppler dimension is not greater than the number of resource elements in the first DD domain resource grid in the Doppler dimension.

19. The method according to any one of claims 12 to 18, further comprising:
determining first time corresponding to the second OTFS frame, wherein the first time is time at which data transmission is performed using the second OTFS frame; and
performing OTFS data transmission with the first device through the second OTFS frame at the first time.

20. The method according to claim 19, wherein the first time is carried by at least one of:
a Radio Resource Control (RRC) message;
Medium Access Control-Control Element (MAC-CE);
Downlink Control Information (DCI).

21. An apparatus of resource allocation for OTFS, comprising:
a transceiving module configured to perform channel estimation with a second device in a Delay Doppler (DD) domain through a first OTFS frame; and
a processing module configured to determine channel state information corresponding to respective time-frequency resource elements in a first time-frequency resource grid;
wherein the first time-frequency resource grid corresponds to a first DD domain resource grid, and the first DD domain resource grid corresponds to the first OTFS frame;
wherein processing module is further configured to: determine a second time-frequency resource grid from the first time-frequency resource grid according to the channel state information corresponding to the respective time-frequency resource elements, and determine a second DD domain resource grid corresponding to the second OTFS frame according to the second time-frequency resource grid.

22. An apparatus of resource allocation for OTFS, comprising:
a transceiving module configured to perform channel estimation with a first device in a Delay Doppler (DD) domain through a first OTFS frame, so that the first device obtains channel state information corresponding to respective time-frequency resource elements in a first time-frequency resource grid;
wherein the first time-frequency resource grid corresponds to a first DD domain resource grid, and the first DD domain resource grid corresponds to the first OTFS frame;
wherein the transceiving module is further configured to receive first information from the first device;
wherein the first information is used to indicate a second DD domain resource grid corresponding to a second OTFS frame, the second DD domain resource grid corresponds to a second time-frequency resource grid, and the second time-frequency resource grid is determined from the first time-frequency resource grid based on the channel state information corresponding to the respective time-frequency resource elements.

23. A terminal, comprising:
one or more processors; and
a memory coupled to the processor and storing executable instructions, wherein when the executable instructions are executed by the processor, the terminal is caused to perform the method of resource allocation for OTFS according to any one of claims 1 to 11, or the method of resource allocation for OTFS according to any one of claims 12 to 20.

24. A network device, comprising:
one or more processors; and
a memory coupled to the processor and storing executable instructions, wherein when the executable instructions are executed by the processor, the network device is caused to perform the method of resource allocation for OTFS according to any one of claims 1 to 11, or to perform the method of resource allocation for OTFS according to any one of claims 12 to 20.

25. A communication device, comprising:
one or more processors;
a memory coupled to the processor and storing executable instructions, wherein when the executable instructions are executed by the processor, the processor is caused to invoke the instructions to cause the communication device to perform the method of resource allocation for OTFS according to any one of claims 1 to 11, or to perform the method of resource allocation for OTFS according to any one of claims 12 to 20.

26. A communication system, comprising:
a terminal configured to implement the method of resource allocation for OTFS according to any one of claims 1 to 11; and
a network device configured to implement the method of resource allocation for OTFS according to any one of claims 12 to 20.

27. A communication system, comprising:
a terminal configured to implement the method of resource allocation for OTFS according to any one of claims 12 to 20; and
a network device configured to implement the method of resource allocation for OTFS according to any one of claims 1 to 11.

28. A storage medium storing instructions, wherein when the instructions are run on a communication device, the communication device is caused to perform the method of resource allocation for OTFS according to any one of claims 1 to 11, or to perform the method of resource allocation for OTFS according to any one of claims 12 to 20.
